# EUROPEAN PATENT APPLICATION

(11) **EP 4 141 194 A1**
(43) Date of publication of application: **01.03.2023**
(21) Application number: 21792406.7
(22) Date of filing: 06.04.2021
(51) Int. Cl.: E04F 15/02, E04F 15/10, B29C 59/16

(54) **MOLDED BODY AND METHOD FOR PRODUCING MOLDED BODY**

(30) Priority: 24.04.2020 JP 2020077353
(71) Applicant: Panasonic Intellectual Property Management Co., Ltd., Osaka-shi, Osaka 540-6207 (JP)
(72) Inventor: MURATA, Atsushi, Osaka-shi, Osaka 540-6207 (JP)
(74) Representative: Appelt, Christian W.
(86) International application number: PCT/JP2021/014675
(87) International publication number: WO 2021/215243

(57) **Abstract**

A molded body (1) is a molded body that includes a marked surface (39) provided on a portion of a surface of the molded body, and in which a plurality of recesses (31) and a plurality of projections (32) are alternately arranged at a predetermined pitch in a predetermined direction in a planar form. The marked surface (39) has a high light absorption rate compared to an area of the molded body other than the marked surface (39) and is a water-repellent surface having a water contact angle of at least 120° or a hydrophilic surface having a water contact angle of at most 60°.

## Description

### [Technical Field]

The present invention relates to a molded body and a method for producing the molded body.

### [Background Art]

For example, among resin molded bodies that are one type of molded bodies, there is known a resin molded body in which a marked surface is formed on a portion of a surface thereof. The marked surface is visually different from the rest of the surface of the resin molded body. In such a resin molded body, a marked surface including a text or a figure is formed by performing laser processing on a portion of the surface (see Patent Literature (PTL) 1, for example).

### [Citation List]

### [Patent Literature]

[PTL 1] Japanese Unexamined Patent Application Publication No. 2001-283669

### [Summary of Invention]

### [Technical Problem]

When a resin molded body is disposed in an environment exposed to water, a marked surface is covered with water and the visibility of the marked surface deteriorates.

An object of the present invention is to provide a molded body and the like of which visibility does not easily deteriorate even when the molded body gets wet.

### [Solution to Problem]

In order to achieve the above-described object, a molded body according to an aspect of the present invention includes a marked surface provided on a portion of a surface of the molded body, the marked surface including a plurality of recesses and a plurality of projections that are alternately arranged at a predetermined pitch in a predetermined direction in a planar form, wherein the marked surface has a light absorption rate higher than a light absorption rate of an area of the molded body other than the marked surface and is a water-repellent surface having a water contact angle of at least 120 degrees or a hydrophilic surface having a water contact angle of at most 60 degrees.

A method for producing a molded body according to an aspect of the present invention includes forming a marked surface by performing laser processing on a portion of a surface of a base material to form a plurality of recesses and a plurality of projections that are alternately arranged at a predetermined pitch in a predetermined direction in a planar form, wherein the marked surface has a light absorption rate higher than a light absorption rate of an area of the base material other than the marked surface and is a water-repellent surface having a water contact angle of at least 120 degrees or a hydrophilic surface having a water contact angle of at most 60 degrees.

### [Advantageous Effects of Invention]

The present invention can provide a molded body and the like of which visibility does not easily deteriorate even when the molded body gets wet.

### [Brief Description of Drawings]

[FIG. 1]

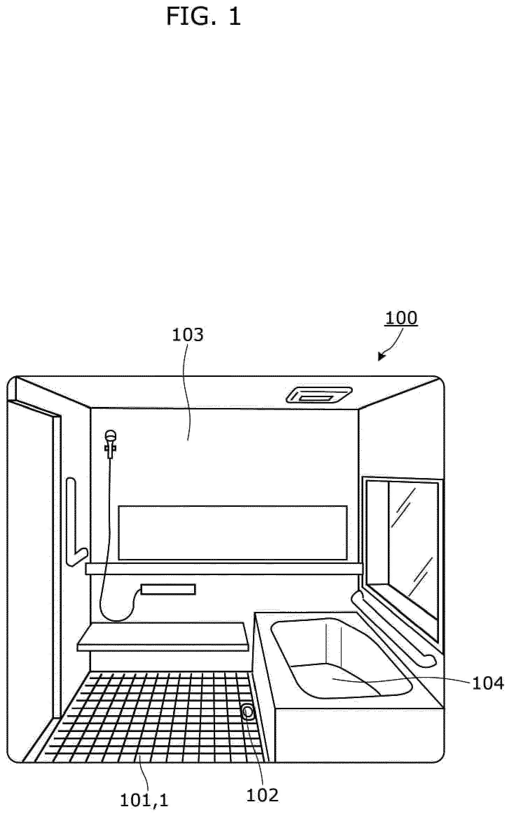

   FIG. 1 is a perspective view illustrating a bathroom in which a resin molded body according to Embodiment 1 is used.
[FIG. 2]

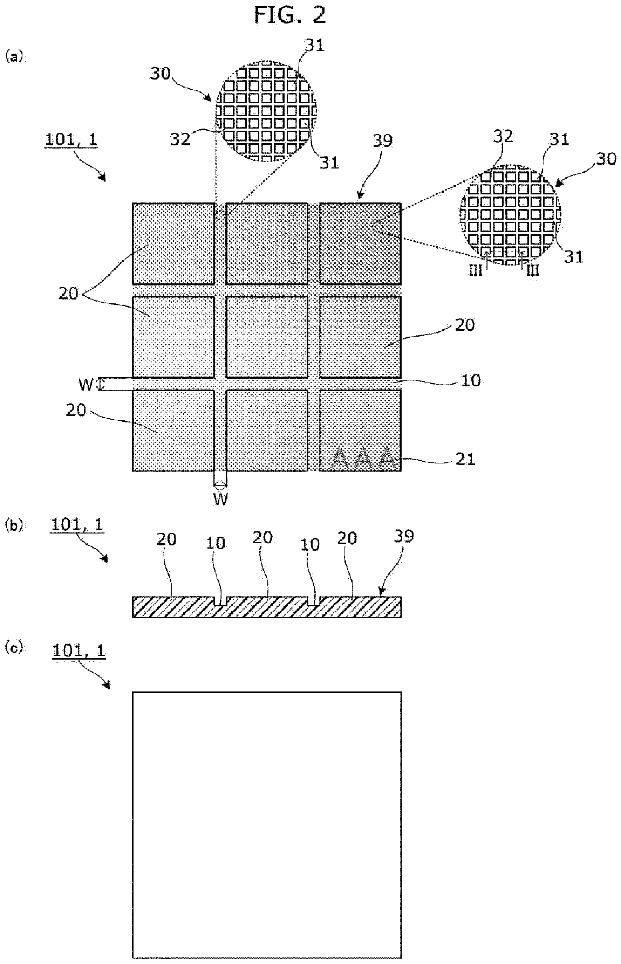

   FIG. 2 is a descriptive diagram illustrating a portion of a floor according to Embodiment 1.
[FIG. 3]

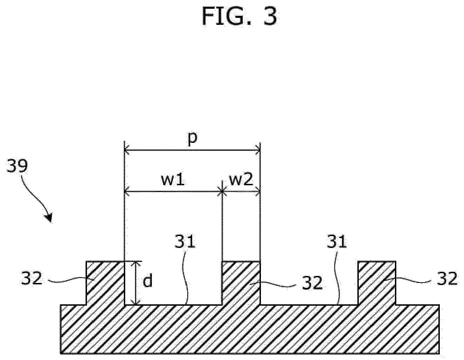

   FIG. 3 is an enlarged cross-sectional view of a marked surface according to Embodiment 1.
[FIG. 4]

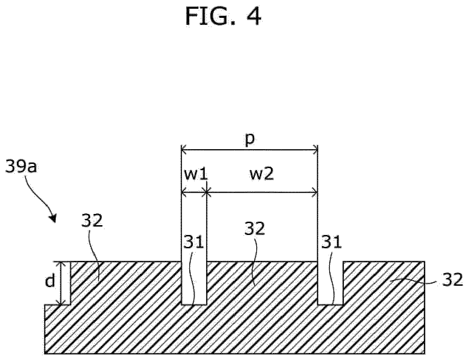

   FIG. 4 is an enlarged cross-sectional view of a marked surface according to Embodiment 2.
[FIG. 5]

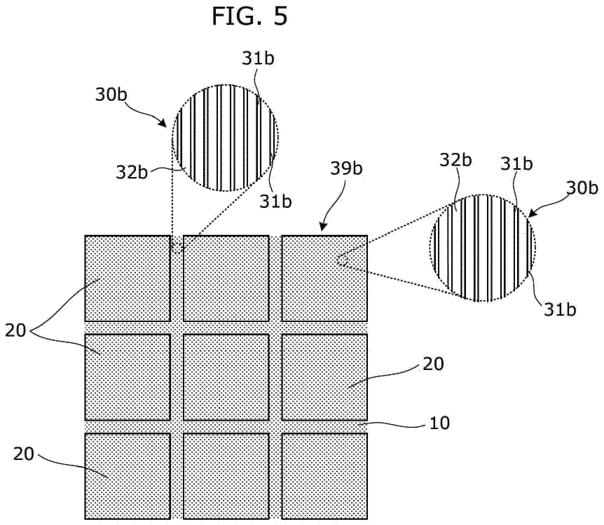

   FIG. 5 is a plan view illustrating an uneven structure according to Embodiment 3.
[FIG. 6]

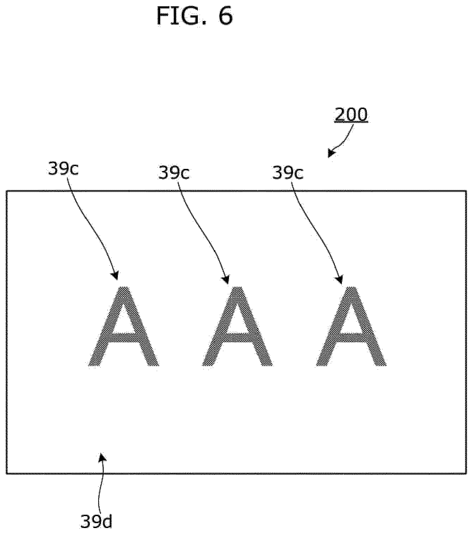

   FIG. 6 is a plan view illustrating a signboard in which a resin molded body according to Embodiment 4 is used.

### [Description of Embodiments]

Hereinafter, a resin molded body according to embodiments of the present invention will be described in detail with reference to the Drawings. It should be noted that each of the embodiments described below shows a specific example of the present invention. Accordingly, the numerical values, shapes, materials, constituent elements, the arrangement and connection of the constituent elements, steps, the order of the steps, etc., in the following embodiments are mere examples, and therefore are not intended to limit the present invention. Therefore, among the constituent elements in the following embodiments, constituent elements not recited in any of the independent claims are described as optional constituent elements.

It should be noted that the respective figures are schematic diagrams and are not necessarily precise illustrations. Accordingly, for example, the scaling, etc., depicted in the figures is not necessarily accurate. Additionally, in the figures, elements that are substantially the same are given the same reference signs, and overlapping descriptions thereof are omitted or simplified.

Additionally, in the present Description, terms indicating relations between elements, such as 'parallel' or 'orthogonal'; terms indicating shapes of elements, such as 'square' or 'rectangle'; and numerical ranges are not strictly defined and include a substantially same range or a margin of error of a few percent.

### [Embodiment 1]

### [Molded Body]

First, an example of an application of resin molded body 1 that is a molded body according to Embodiment 1 will be described with reference to FIG. 1. FIG. 1 is a perspective view illustrating bathroom 100 in which resin molded body 1 according to Embodiment 1 is used.

As shown in FIG. 1, bathroom 100 includes floor 101 including drain outlet 102, wall 103, and bathtub 104. Although it is sufficient that at least one of floor 101, wall 103, or bathtub 104 is formed using resin molded body 1, the present embodiment describes, as an example, a case where floor 101 is formed using resin molded body 1.

FIG. 2 is a descriptive diagram illustrating a portion of floor 101 according to Embodiment 1. Specifically, (a) in FIG. 2 is a plan view illustrating a front surface of floor 101. (b) in FIG. 2 is a cross-sectional view of floor 101. (c) in FIG. 2 is a plan view illustrating a back surface of floor 101. Each of the front surface and the back surface of floor 101 is an entirely exposed surface of resin molded body 1 which is a base material. In other words, no coating layer or the like is laminated on the surface of resin molded body 1.

As shown in (a) and (b) in FIG. 2, the front surface of floor 101 includes boundary part 10 which is in the shape of grooves and a plurality of planar parts 20 defined by boundary part 10.

Boundary part 10 consists of grooves formed in a lattice shape on the front surface of floor 101. Boundary part 10 consists of grooves for draining water. Boundary part 10 consists of, for example, through grooves (i.e., linear grooves). Width W of each groove forming boundary part 10 is of millimeter order and uniform.

The plurality of planar parts 20 are each formed in a square shape in a plan view and are arranged in a matrix. Label 21 is provided on a front surface of at least one planar part 20 of the plurality of planar parts 20. Various information (e.g., the manufacturer's name, the brand name, a caution) is indicated on label 21.

Fine uneven structure 30 is formed on front surfaces of boundary part 10 and planar parts 20. (a) in FIG. 2 illustrates an enlarged view of uneven structure 30 on each of the front surface of boundary part 10 and the front surface of planar part 20. Although the present embodiment describes, as an example, a case where uneven structure 30 on the front surface of boundary part 10 and uneven structure 30 on the front surface of planar part 20 are same structure, they may be different from each other. It should be noted that, here, the front surface of boundary part 10 consists of bottom surfaces of the grooves forming boundary part 10. Specifically, marked surface 39 is not formed on side surfaces of the grooves (i.e., side surfaces of planar parts 20). It should be noted that when a cross-sectional shape of each of the grooves is a trapezoidal shape widening upward, marked surface 39 can also be formed on the side surfaces of the grooves.

Uneven structure 30 includes a plurality of recesses 31 arranged in a matrix in a plan view. Each of recesses 31 is substantially square in a plan view. The portions between the plurality of recesses 31 in a predetermined direction form projections 32. Although it can be said that there is a single projection 32 because projection 32 is in a lattice shape and continuous as a whole, it can also be said that there are a plurality of projections 32 because projection 32 is separated by recesses 31 when viewed only in the predetermined direction. In other words, the plurality of recesses 31 and the plurality of projections 32 are alternately arranged at a predetermined pitch in both a lengthwise direction and a crosswise direction. A face including such a fine uneven structure 30 is referred to as marked surface 39.

As shown in (c) in FIG. 2, the back surface of floor 101 does not include marked surface 39 and is flat as a whole. In short, the front surface of floor 101 has a high light absorption rate compared to the back surface of floor 101 because the front surface of floor 101 includes marked surface 39 on the front surfaces of boundary part 10 and each planar part 20.

Hereinafter, marked surface 39 will be described in detail. FIG. 3 is an enlarged cross-sectional view of marked surface 39 according to Embodiment 1. Specifically, FIG. 3 is a cross-sectional view taken along line III-III in (a) in FIG. 2.

As shown in FIG. 3, the sum of width w2 of projection 32 and width w1 of recess 31 in the predetermined direction is the predetermined pitch (p=w1+w2). Marked surface 39 can be made into a water-repellent surface by setting predetermined pitch p, width w1, and width w2 so as to satisfy a specific relation. Specifically, the water contact angle on marked surface 39 can be set to at least 120°.

For example, by assuming width w2/width w1 < 0.5 and setting predetermined pitch p to be between 200 nm and 300 µm, inclusive, the water contact angle on marked surface 39 can be set to at least 120°. It is preferable that predetermined pitch p be between 200 nm and 100 µm, inclusive. It is more preferable that predetermined pitch p be between 200 nm and 50 µm, inclusive. Predetermined pitch p is smaller than width W of each groove of boundary part 10.

As long as the relation is satisfied, uneven structure 30 may be non-uniform in marked surface 39. Specifically, portions having different light absorption properties can be formed in marked surface 39 by forming a dense portion and a sparse portion in uneven structure 30. For example, in (a) in FIG. 2, uneven structure 30 in label 21 is denser than that in the rest of marked surface 39. Accordingly, in label 21, the light absorption property is enhanced and thus visibility different from the rest of marked surface 39 is manifested. In other words, in marked surface 39, various information can be indicated without using paint or the like.

Furthermore, when depth d of recess 31 and width w2 satisfy a relation of depth d/width w2 ≤ 1, the strength of projection 32 can be enhanced and thus damage to projection 32 can be reduced.

Next, a method for producing resin molded body 1 will be described.

First, a base material in a board-like shape is prepared. The base material can be formed from any resin, as long as laser processing can be performed thereon. Examples of resin on which laser processing can be performed include thermoplastic resins. Examples of the thermoplastic resins include: polyolefin resins; polyamide resins; elastomer resins, such as styrene resins, olefin resins, polyvinyl chloride (PVC) resins, urethane resins, ester resins, and amide resins; polyester resins; engineering plastics; polyethylene; polypropylene; nylon resins; acrylonitrile butadiene styrene (ABS) resins; acrylic resins; ethylene acrylate resins; ethylene-vinyl acetate resins; polystyrene resins; polyphenylene sulfide resins; polycarbonate resins; polyester elastomer resins; polyamide elastomer resins; liquid crystal polymers; polybutylene terephthalate resins; cellulose acetates; and polyvinyl acetates. One of the above-described resins may be used alone or a mixture of a plurality of resins that includes, as a main component, one of the above-described resins may be used.

Furthermore, the base material may include a thermosetting resin. Examples of the thermosetting resin include epoxy resins, unsaturated polyester resins, vinyl ester resins, phenolic resins, urethane resins, melamine resins, urea resins, maleimide resins, cyanate ester resins, alkyd resins, addition-curable polyimide resins, and thermosetting acrylic resins. The thermosetting resin may include one of the above-described resins or a mixture of a plurality of resins that includes, as a main component, one of the above-described resins. Accordingly, the heat resistance of resin molded body 1 can be enhanced. In particular, the base material may include at least one of filler, glass fiber, carbon fiber, or colorant.

Next, pressing is performed on the base material to form boundary part 10 and the plurality of planar parts 20 on the front surface of the base material.

Subsequently, laser processing is performed on the front surface of the base material to form marked surface 39. Specifically, marked surface 39 is formed by performing laser processing on a portion (front surfaces of boundary part 10 and the plurality of planar parts 20) of the front surface of the base material to form the plurality of recesses 31 and the plurality of projections 32 that are alternately arranged at predetermined pitch p in the predetermined direction in a planar form. The front surface of the base material is irradiated with a short pulse laser from a laser emitter that emits a laser. The pulse width of the short pulse laser is preferably less than or equal to a nanosecond.

When marked surface 39 is formed by laser irradiation, the light absorption rate of marked surface 39 is enhanced compared to an area (back surface or side surface) of the base material other than marked surface 39. This is considered to be due to the various factors described below. For example, 1) the front surface of the base material is carbonized by laser irradiation and turns into a dark color. 2) The molecular density of the front surface of the base material is increased and concentrated by laser irradiation, and thus the front surface of the base material turns into a dark color. 3) A level of impurity of metallic oxide is formed on the front surface of the base material by laser irradiation, and thus the front surface of the base material turns into a dark color. Although it is currently uncertain which factor is reliable, laser processing consequently causes marked surface 39 to have a dark color and a high light absorption rate compared to other area of the base material.

Here, when the base material includes at least one additive such as filler, glass fiber, carbon fiber, or colorant, laser irradiation causes the additive to undergo chemical reaction, and thus the light absorption rate can be further enhanced.

The above-described process produces resin molded body 1 that includes marked surface 39 that is a water-repellent surface having a water contact angle of at least 120° and has a high light absorption rate compared to other area of the resin molded body 1. It should be noted that analysis of marked surface 39 can confirm that marked surface 39 was formed by laser processing.

### [Advantageous Effects, etc.]

As described above, marked surface 39 of resin molded body 1 is a water-repellent surface having a water contact angle of at least 120° and has a high light absorption rate compared to an area of resin molded body 1 other than marked surface 39. Specifically, marked surface 39 demonstrates the above-described properties because of uneven structure 30. Uneven structure 30 is engraved on the front surface of resin molded body 1. Therefore, uneven structure 30 is likely to remain even when it gets wet. For example, it is also possible to demonstrate a certain level of water repellency even with a structure in which a sheet provided with an uneven structure is attached on a front surface of a resin molded body or with a structure in which a fluorine layer is applied on a front surface of a resin molded body. However, there is a risk that the sheet or the fluorine layer may peel off from the resin molded body with prolonged use. Whereas, in the present embodiment, the water repellency of marked surface 39 is achieved by uneven structure 30 engraved on the front surface of resin molded body 1, and thus the properties of marked surface 39 can be maintained stably for a long time.

Especially, since marked surface 39 is a water-repellent surface having a water contact angle of at least 120°, it easily repels water. Accordingly, the visibility of marked surface 39 can be prevented from deteriorating due to getting wet.

Consequently, it is possible to provide resin molded body 1 of which visibility does not easily deteriorate even when it gets wet.

Furthermore, since the plurality of recesses 31 and the plurality of projections 32 are alternately arranged at predetermined pitch p, uneven structure 30 interferes with and disperses reflected light, and thus structural color appears on at least a portion of marked surface 39. In other words, the peak wavelength of the reflection spectrum becomes angle dependent at a portion of marked surface 39. Accordingly, in marked surface 39, the color changes depending on the viewing angle, and thus the visibility of marked surface 39 is further enhanced.

Furthermore, because depth d of recess 31 and width w2 of projection 32 satisfy the relation of depth d/width w2 ≤ 1, the strength of projection 32 can be enhanced and thus damage to projection 32 can be reduced.

Furthermore, the grooves (grooves forming boundary part 10) each having width W greater than or equal to predetermined pitch p are formed on the front surface of resin molded body 1, and marked surface 39 is formed on the inside of the grooves. Accordingly, the visibility of the inside of the grooves can be enhanced. Furthermore, the water repellency of the grooves can be maintained for a long time.

Furthermore, since the molded body is resin molded body 1, it is suitable for laser processing.

Furthermore, since resin molded body 1 includes a thermosetting resin, the heat resistance of resin molded body 1 can be enhanced.

Furthermore, since resin molded body 1 includes at least one of filler, glass fiber, carbon fiber, or colorant, the strength of resin molded body 1 can be enhanced. Accordingly, the shape of uneven structure 30 can be maintained for a longer time. Furthermore, since the additives undergo chemical reaction due to laser irradiation, the light absorption rate can be further enhanced.

Furthermore, since marked surface 39 is formed by laser processing, uneven structure 30 can be formed without using organic material or the like that tends to have an impact on the environment.

### [Embodiment 2]

In Embodiment 1, a case where marked surface 39 is a water-repellent surface is described as an example. In Embodiment 2, a case where marked surface 39a is a hydrophilic surface will be described. FIG. 4 is an enlarged cross-sectional view of marked surface 39a according to Embodiment 2. Specifically, FIG. 4 is a diagram corresponding to FIG. 3. It should be noted that, hereinafter, parts equivalent to the parts in Embodiment 1 are given the same reference signs and descriptions thereof may be omitted.

As shown in FIG. 4, a fine uneven structure 30 in which a plurality of recesses 31 and a plurality of projections 32 are arranged at a predetermined pitch in a planar form is formed in marked surface 39a. The sum of width w2 of projection 32 and width w1 of recess 31 in a predetermined direction is the predetermined pitch (p=w1+w2). Marked surface 39a can be made into a hydrophilic surface by setting predetermined pitch p, width w1, and width w2 so as to satisfy a specific relation. Specifically, the water contact angle on marked surface 39a can be set to at most 60°.

For example, by assuming width w2/width w1 ≥ 0.5 and setting predetermined pitch p to be between 1 µm and 1000 µm, inclusive, the water contact angle on marked surface 39a can be set to at most 60°. In this case as well, predetermined pitch p is smaller than width W of each groove of boundary part 10.

Furthermore, when depth d of recess 31 and width w2 satisfy a relation of depth d/width w2 ≤ 1, the strength of projection 32 can be enhanced and thus damage to projection 32 can be reduced.

In this way, marked surface 39a of resin molded body 1A is a hydrophilic surface having a water contact angle of at most 60° and has a high light absorption rate compared to an area of resin molded body 1A other than marked surface 39a. In other words, marked surface 39a demonstrates the above-described properties because of uneven structure 30. Uneven structure 30 is engraved on a front surface of resin molded body 1A. Therefore, uneven structure 30 is likely to remain even when it gets wet, and thus the properties of marked surface 39a can be maintained stably for a long time.

In particular, since marked surface 39a is a hydrophilic surface having a water contact angle of at most 60°, water does not form a droplet but spreads over marked surface 39a. Accordingly, the visibility of marked surface 39a can be prevented from deteriorating.

Consequently, it is possible to provide resin molded body 1A of which visibility does not easily deteriorate even when it gets wet.

### [Embodiment 3]

In Embodiment 1, uneven structure 30 in which a plurality of recesses 31 are arranged in a matrix is described as an example. In Embodiment 3, uneven structure 30b in which a plurality of recesses 31b are arranged in stripes will be described as an example. FIG. 5 is a plan view illustrating uneven structure 30b according to Embodiment 3. Specifically, FIG. 5 is a diagram corresponding to (a) in FIG. 2. As shown in FIG. 5, each of recesses 31b and each of projections 32b are formed in a linear shape. The plurality of recesses 31b and the plurality of projections 32b are alternately arranged at a predetermined pitch. In this case, marked surface 39b can be made into a water-repellent surface or a hydrophilic surface, as long as the above-described condition is satisfied.

It should be noted that recesses and projections may be formed in any shape in a plan view, as long as they are alternately arranged at a predetermined pitch. Furthermore, a plurality of marked surfaces may be provided in a single surface. Furthermore, a plurality of marked surfaces each having recesses and projections in a layout different from the layout in another marked surface can be formed overlapping with one another. In this case, the above-described factors 1) to 3) become more prominent, and thus a portion where the plurality of marked surfaces overlap with one another has a high light absorption rate compared to the rest of a molded body. Furthermore, the layout, shape, and size of the recesses and projections may vary in a single marked surface.

### [Embodiment 4]

Furthermore, in Embodiment 1, a case where resin molded body 1 is applied to bathroom 100 is described as an example. However, resin molded body 1 is applicable to any structure that may get wet. Other structures to which resin molded body 1 is applied include a surface material of a lighting fixture that is disposed outdoors, such as a street light or a neon sign, a lighting device for a fountain or a swimming pool, a headlight of a vehicle, digital signage, a television installed outdoors, a traffic sign, and a signboard.

For example, in FIG. 6, a case where resin molded body 1 according to Embodiment 4 is applied to signboard 200C is illustrated. As shown in FIG. 6, a front surface of signboard 200C includes a plurality of marked surfaces 39c and area 39d other than marked surfaces 39c. Because of an uneven structure not shown in the figure, the plurality of marked surfaces 39c have a higher light absorption rate than area 39d. On the other hand, no uneven structure is formed on area 39d. Specifically, each of marked surfaces 39c forms a letter 'A'. In this case as well, even when marked surface 39c gets wet, marked surface 39c is not easily obstructed by water since marked surface 39c is a water-repellent surface or a hydrophilic surface. Accordingly, the visibility of a content displayed on signboard 200A can be maintained.

### [Other embodiments]

Although wet-area components according to the present invention have been described thus far based on the foregoing embodiments, the present invention is not limited to the foregoing embodiments.

For example, the top view shape of each planar part 20 need not be a quadrilateral shape, such as a square, a rectangle, a parallelogram, or a rhombus. The top view shape of each planar part 20 may be a polygonal shape, such as a triangle or a hexagon, or an asymmetrical shape at least partially including a curve. For example, the top view shapes of planar parts 20 may be asymmetrical shapes different from one another.

Furthermore, in the above embodiments, a case where planar part 20 only includes marked surface 39 having water repellency is described as an example. However, there may be both a marked surface having water repellency and a marked surface having hydrophilicity on a same surface of a planar part. For example, when a marked surface having water repellency and a marked surface having hydrophilicity are alternately arranged on a same surface of a planar part (resulting in non-uniform uneven structures 30 on the same surface), the Marangoni effect causes water droplets to roll out from the same surface of the planar part even when it is a level surface, and thus an effect of enhancing visibility is exerted.

Furthermore, although a case where resin molded body 1 includes grooves forming boundary part 10 is described as an example in the foregoing embodiments, elements of the present invention can also be applied to a resin molded body that includes no groove.

Furthermore, although resin molded body 1 is given as an example of a molded body in the above-described embodiments, the molded body can be formed of any material on which laser processing can be performed. Example of the material includes metal or the like.

Additionally, various modifications of the embodiments conceivable by those skilled in the art as well as forms resulting from arbitrary combinations of constituent elements and functions in the embodiments which do not depart from the essence of the present invention are intended to be included within the scope of the present invention.

### [Reference Signs List]

- 1: resin molded body (molded body)
- 10: boundary part (grooves)
- 31,31b: recess
- 32,32b: projection
- 39,39a,39b,39c: marked surface
- 39d: area
- p: predetermined pitch
- W,w1,w2: width

## Claims

1. A molded body comprising:
a marked surface provided on a portion of a surface of the molded body, the marked surface including a plurality of recesses and a plurality of projections that are alternately arranged at a predetermined pitch in a predetermined direction in a planar form, wherein
the marked surface has a light absorption rate higher than a light absorption rate of an area of the molded body other than the marked surface and is a water-repellent surface having a water contact angle of at least 120 degrees or a hydrophilic surface having a water contact angle of at most 60 degrees.

2. The molded body according to claim 1, wherein
a depth of each of the recesses and a width of each of the projections satisfy a relation of depth/width ≤ 1.

3. The molded body according to claim 1 or 2, wherein
the surface includes a groove having a width greater than or equal to the predetermined pitch, and
the marked surface is provided on an inside of the groove.

4. The molded body according to any one of claims 1 to 3, wherein
the molded body is made of resin.

5. The molded body according to claim 4, comprising:
a thermosetting resin.

6. The molded body according to claim 4 or 5, comprising:
at least one of a filler, a glass fiber, a carbon fiber, or a colorant.

7. The molded body according to any one of claims 1 to 5, wherein
the marked surface is formed by laser processing.

8. A method for producing a molded body, the method comprising:
forming a marked surface by performing laser processing on a portion of a surface of a base material to form a plurality of recesses and a plurality of projections that are alternately arranged at a predetermined pitch in a predetermined direction in a planar form, wherein
the marked surface has a light absorption rate higher than a light absorption rate of an area of the base material other than the marked surface and is a water-repellent surface having a water contact angle of at least 120 degrees or a hydrophilic surface having a water contact angle of at most 60 degrees.
